Europäisches Patentamt

European Patent Office

Office européen des brevets

(19)

(11) Veröffentlichungsnummer : **0 107 006**
**B1**

(12) # EUROPÄISCHE PATENTSCHRIFT

(45) Veröffentlichungstag der Patentschrift :
21.11.85

(51) Int. Cl.⁴ : **C 07 F   9/50, C 07 C139/14**

(21) Anmeldenummer : 83109013.9

(22) Anmeldetag : 13.09.83

(54) Verfahren zur Herstellung von sulfonierten Arylphosphinen.

(30) Priorität : 22.09.82 DE 3235030

(43) Veröffentlichungstag der Anmeldung :
02.05.84 Patentblatt 84/18

(45) Bekanntmachung des Hinweises auf die Patenterteilung : 21.11.85 Patentblatt 85/47

(84) Benannte Vertragsstaaten :
AT BE DE FR GB IT LU NL SE

(56) Entgegenhaltungen :
EP-A- 0 041 134
US-A- 3 719 703
US-A- 4 260 750
Patent Abstracts of Japan Band 1, Nr. 53, 23. Mai 1977
Seite 323C77

(73) Patentinhaber : Ruhrchemie Aktiengesellschaft
Bruchstrasse 219
D-4200 Oberhausen 13 (DE)

(72) Erfinder : Gärtner, Roderich, Dr., Dipl.-Chem.
Kirchstrasse 171
D-4220 Dinslaken (DE)
Erfinder : Cornils, Boy, Dr., Dipl.-Chem.
Friedrich-Ebert-Strasse 45
D-4220 Dinslaken (DE)
Erfinder : Springer, Helmut
Drostenkampstrasse 24
D-4200 Oberhausen 11 (DE)
Erfinder : Lappe, Peter, Dr., Dipl.-Chem.
Zum Ravenhorst 9
D-4200 Oberhausen 14 (DE)

(74) Vertreter : Reichelt, Karl-Heinz, Dr.
m. Br. Ruhrchemie Aktiengesellschaft Abt. PLD Postfach 13 01 60
D-4200 Oberhausen 13 (DE)

**Beschreibung**

Die vorliegende Erfindung betrifft ein Verfahren zur Herstellung reiner sulfonierter Arylphosphine.

Die Herstellung sulfonierter Phenylphosphine ist bekannt. So erhält man das Natriumsalz des m-Sulfophenyl-diphenyl-phosphins durch Umsetzung von Triphenylphosphin mit Oleum, Erwärmen des Reaktionsgemisches auf einem Wasserbad, Verdünnen des Umsetzungsproduktes mit Wasser und Neutralisieren mit Natriumhydroxid. Aus dem Gemisch kristallisiert dann die gewünschte Verbindung aus (J. Chem. Soc. 1958, Seiten 281, 282).

Nach ähnlichen Verfahren gewinnt man auch die Natriumsalze des Di(m-sulfophenyl)phenylphosphins und des Tri(m-sulfophenyl)-phosphins. Einsatzstoff ist in beiden Fällen wiederum Triphenylphosphin, das mit Oleum bei Temperaturen zwischen 18 und 40 °C in einem Zeitraum von 15 bis 63 Std. umgesetzt wird. Das Reaktionsprodukt wird ebenfalls mit Wasser verdünnt und mit natriumhydroxid neutralisiert, wobei darauf geachtet wird, daß während der Zugabe des Natriumhydroxids im Gemisch Temperaturen unterhalb 20 °C eingehalten werden (DE-PS 26 27 354).

Durch Behandlung der Natriumsalze mit einem Kationenaustauscherharz gewinnt man die freien Säuren, die mit verschiedenen Basen zu anderen Salzen umgesetzt werden können. Auf diesem Wege lassen sich z. B. das Barium- und das Tetraethylammoniumsalz des Tri(sulfophenyl)phosphins darstellen (DE-PS 26 27 354).

Ein Nachteil der bekannten Verfahren zur Herstellung sulfonierter Arylphosphine ist die Bildung zahlreicher Nebenprodukte, insbesondere der verschiedenen Sulfonierungsstufen der Arylphosphine, Arylphosphinoxide und der Arylphosphinsulfide. Die Gewinnung der reinen Verbindungen ist nur durch aufwendige und verlustreiche Reinigungsoperationen zu erreichen.

Sulfonierte Arylphosphine werden u. a. als Bestandteile von Katalysatorsystemen eingesetzt. Für diesen, aber auch andere Verwendungszwecke ist es erforderlich, reine Substanzen zur Verfügung zu haben, also einheitliche Sulfonierungsprodukte, die überdies frei von weiteren Verunreinigungen sind, die als Nebenprodukte bei der Herstellung anfallen, wie sulfonierte Arylphosphinoxide und Arylphosphinsulfide oder die im Verlauf der Herstellung in das Reaktionsgemisch eingeschleppt werden können, wie Chlorid- und Eisenionen.

Es bestand daher die Aufgabe, ein Verfahren zur Herstellung sulfonierter Arylphosphine zu entwickeln, das die Nachteile der bekannten Prozesse nicht besitzt und auf einfachem Wege ohne Anwendung verlustreicher Arbeitsschritte zu den reinen Substanzen führt.

Erfindungsgemäß wird dieses Ziel erreicht durch ein Verfahren zur Herstellung mono-, di- oder tri-sulfonierter Arylphosphine durch Sulfonierung von Triarylphosphinen mit Oleum bei 0 bis 40 °C und Verdünnen des Sulfonierungsgemisches mit Wasser.

Es ist dadurch gekennzeichnet, daß man die wäßrige Lösung des Sulfonierungsgemisches mit der Lösung eines wasserunlöslichen Amins in einem wasserunlöslichen organischen Lösungsmittel extrahiert, wobei je Äquivalent Sulfonsäure 0,5 bis 1,5 Mol des Amins zur Anwendung gelangen, die organische Phase abtrennt, mit der wäßrigen Lösung einer Base in innige Berührung bringt, darauf die wäßrige Phase abtrennt und aus dieser das sulfonierte Arylphosphin isoliert.

Die neue Arbeitsweise ermöglicht es, Salze sulfonierter Arylphosphine nicht nur von Verunreinigungen zu befreien, die beim Herstellungsprozeß in das Reaktionsprodukt gelangen, sondern auch die Nebenprodukte zu entfernen und die Arylphosphine der verschiedenen Sulfonierungsstufen anzureichern und schließlich voneinander zu trennen.

Ein Verfahren zur Abtrennung wasserlöslicher Salze aromatischer Sulfonsäuren ist in der EP-A 00 41 134 beschrieben. Hierbei wird ein mit Wasser verdünntes Sulfiergemisch mit einer der Sulfonsäure äquivalenten Menge eines solchen wasserunlöslichen Amins behandelt, das mit der Sulfonsäure ein lipophiles Salz bildet. Darauf trennt man die entstehenden zwei Phasen und behandelt die das Ammoniumsalz enthaltende Phase mit der stöchiometrischen Menge einer wasserlöslichen Base, deren sulfonsaures Salz hergestellt werden soll. Man erhält das sulfonsaure Salz in wässriger Lösung, aus der es isoliert werden kann. Dieses Verfahren setzt voraus, daß das Ammoniumsalz unterhalb der Siedetemperatur der wässrigen Schwefelsäure flüssig ist. Überdies enthalten die nach diesem Verfahren zu behandelnden Sulfonate keine Nebenprodukte von der Art der Phosphinoxide bzw. Phosphinsulfide, die eine den gewünschten Verbindungen sehr ähnliche Konstitution besitzen, daher kaum unterschiedliches physikalisches Verhalten zeigen, aber dennoch vollständig abgetrennt werden müssen.

Das neue Verfahren ist allgemein anwendbar auf mono-, di- und trisubstituierte Arylphosphine oder deren Gemische, d. h. insbesondere Phosphine, die Phenyl- oder Naphthylreste, die gegebenenfalls auch Alkylreste enthalten können, aufweisen.

Das erfindungsgemäße Verfahren wird wie folt ausgeführt :

Das Sulfonierungsgemisch wird unter Aufrechterhaltung einer Temperatur zwischen 0 und 90 °C, insbesondere 20 und 40 °C mit soviel Wasser versetzt, wie zur Verdünnung der vorhandenen Schwefelsäure auf 0,5 bis 50 Gew.%, vorzugsweise 25 bis 35 Gew.% nötig ist. Zu der verdünnten Lösung gibt man das in einem wasserunlöslichen organischen Lösungsmittel gelöste wasserunlösliche Amin. Die Konzentration der Amin-Lösung beträgt 0,5 bis 35 Gew.%, vorzugsweise 10 bis 30 Gew.% und insbesondere 15 bis 25 Gew.% Amin.

2

Je Äquivalent Sulfonsäure verwendet man 0,5 bis 1,5 Mol, vorzugsweise 0,8 bis 1,2 Mol Amin. Der Einsatz überschüssigen Amins stellt sicher, daß nur geringe Ausbeuteverluste eintreten. Ein höherer Aminüberschuß als erfindungsgemäß angewendet ist zwar möglich, führt jedoch nicht zur Verbesserung des Ergebnisses der Trenn- bzw. Reinigungsoperation oder der Ausbeute.

Nach intensivem Mischen bilden sich zwei Phasen. Die spezifisch schwerere, wäßrige Phase enthält die Säure, die sulfatarme organische Phase das Aminsalz der Sulfonsäure gelöst in dem organischen Lösungsmittel (Salzphase). Die Salzphase wird abgetrennt.

Anschließend setzt man die Salzphase mit der Lösung einer Base in Wasser um, deren sulfonsaures Salz hergestellt werden soll. Die Base gelangt hierbei in eine der gelösten Aminsalzmenge äquivalenten Menge zum Einsatz. Überschüssige Base verunreinigt das Endprodukt. Man erhält so unter Wiedergewinnung des wasserunlöslichen Amins eine wäßrige Lösung des gewünschten Sulfonsäuresalzes. Das Amin steht für einen erneuten Einsatz zur Verfügung.

Das erfindungsgemäße Verfahren kann sowohl diskontinuierlich als auch kontinuierlich durchgeführt werden. Die für Stofftrennungen gebräuchlichen Apparate wie Gegenstromextraktionsanlagen finden Anwendung.

Statt die in Wasser gelöste Base auf einmal der Lösung des Aminsalzes im organischen Medium zuzusetzen, kann die Zugabe nach einer bevorzugten Ausführungsform des erfindungsgemäßen Verfahrens in Anteilen erfolgen. Diese Arbeitsweise wird mit Erfolg besonders dann eingesetzt, wenn die Auftrennung eines Sulfonierungsgemisches angestrebt wird, das Produkte verschiedener Sulfonierungsstufen enthält. Die Zahl der Reextraktionsschritte, d. h. der Überführung der als Aminsalz im organischen Medium gelösten Sulfonsäure in die wässrige Phase durch Behandlung mit der wässrigen Lösung einer Base, ist der Zusammensetzung des Reaktionsgemisches anzupassen. Im allgemeinen reicht zwei- bis fünfmalige Reextraktion vollständig aus, um die reinen Sulfonsäuren zu erhalten. Zweckmäßig fügt man die in Wasser gelöste Base der organischen Phase solange zu, bis ein bestimmter pH-Wert erreicht ist, trennt dann die Phasen voneinander, setzt die Basenzugabe bis zur Einstellung jeweils höherer pH-Werte fort und arbeitet die wässrigen Lösungen getrennt auf.

Als wasserunlösliche Amine, die erfindungsgemäß zur Durchführung des neuen Verfahrens eingesetzt werden, kommen wasserunlösliche homo- und heterocyclische, aliphatische, aromatische, araliphatische und vorzugsweise offenkettige, verzweigte oder unverzweigte aliphatische Amine mit 10 bis 60, vorzugsweise 13 bis 36 Kohlenstoffatomen in Betracht. Weniger geeignet sind Amine, deren Salze mit den Sulfonsäuren in dem organischen Lösungsmittel nicht oder nur beschränkt löslich sind. Als Beispiele für besonders bewährte Amine seien genannt : Tri-n-octylamin, Tri-isooctylamin, Tri-2-ethylhexylamin, Methyl-di-octylamin, Tridodecylamin.

Die Amine werden in einem wasserunlöslichen organischen Lösungsmittel gelöst. Geeignet sind insbesondere aliphatische oder aromatische Kohlenwasserstoffe oder Kohlenwasserstoffgemische, z. B. Toluol oder kerosinähnliche Fraktionen, daneben auch $C_4$-$C_{20}$-Alkohole, $C_8$-$C_{20}$-Ether.

Als Basen für die Überführung der sulfonsauren Phosphine in die Wasserphase und gleichzeitig in das als Endprodukt gewünschte Salz sind die Hydroxyde der Alkali- und Erdalkalimetalle insbesondere Alkalihydroxid, Ammoniak, daneben auch die Alkalicarbonate geeignet. Es können aber auch wasserlösliche Amine eingesetzt werden, wie Methylamin, Ethylamin, Propylamin, Butylamin oder Ethanolamin.

Das Verfahren wird zweckmäßig bei Raumtemperatur durchgeführt. Höhere Temperaturen ergeben keine Vorteile. Die Angaben über die Löslichkeit der Amine und der organischen Lösungsmittel im Wasser beziehen sich hierbei jeweils auf die Temperaturen, bei denen das Verfahren durchgeführt wird.

Das Endprodukt wird entweder in der wäßrigen Lösung belassen oder durch Eindampfen oder durch Kristallisation, Dekantieren oder Abfiltrieren in fester Form gewonnen.

Durch die folgenden Beispiele wird die Erfindung näher erläutert.

Beispiel 1

Herstellung von TPPDS sowie Extraktion des Sulfonierungsgemisches

In einem mit Rührer, Thermometer, Tropftrichter und Kühler ausgestatteten 1 l-Kolben werden 960 g 30 %iges Oleum (D = 1,94) vorgelegt und unter Stickstoff auf eine Innentemperatur von 15 °C abgekühlt. Danach setzt man im Verlauf von 2 Stunden 105 g (0,4 mol) Triphenylphosphin und weitere 320 g 30 %iges Oleum unter Rühren ein und hält die Reaktionstemperatur zwischen 15 und 20 °C. Nach beendeter Zugabe wird das Reaktionsgemisch noch 3,5 Stunden bei 20 °C weitergerührt.

Anschließend wird der Kolbeninhalt unter Stickstoff-Schutz in einen 2505 g Wasser von etwa 10 °C enthaltenden 6 l-Kolben gegeben. Während der Zugabe wird die Innentemperatur durch intensive Außenkühlung zwischen 20 und 40 °C gehalten.

Die Reaktionslösung hat folgende Zusammensetzung (m = 3 890 g) :

(Siehe Tabelle 1 Seite 4 f.)

Tabelle 1

|         | Masse (g) | m Mol | Mol-% |
|---------|-----------|-------|-------|
| TPPMS   | 2,3       | 6     | 1,5   |
| DS      | 119,8     | 257   | 64,1  |
| TS      | 26,5      | 44    | 11,0  |
| ODS     | 26,1      | 54    | 13,5  |
| OTS     | 8,6       | 15    | 3,7   |
| SDS     | 8,2       | 17    | 4,2   |
| STS     | 4,7       | 8     | 2,0   |

(Die in der vorstehenden und in den nachfolgenden Tabellen verwendeten Abkürzungen bedeuten :
TPPMS : Triphenylphosphinmonosulfonsäure-salz
DS : Triphenylphosphindisulfonsäure-salz
TS : Triphenylphosphintrisulfonsäure-salz
OMS : Triphenylphosphinoxidmonosulfonsäure-salz
ODS : Triphenylphosphinoxiddisulfonsäure-salz
OTS : Triphenylphosphinoxidtrisulfonsäure-salz
SDS : Triphenylphosphinsulfidddisulfonsäure-salz
STS : Triphenylphosphinsulfidtrisulfonsäure-salz)

Das homogene Sulfonierungsgemisch obiger Zusammensetzung wird in einem 6 l-Kolben unter Stickstoff vorgelegt und unter Rühren mit einer Mischung aus 303 g (858 mMol) Triisooctylamin und 1 212 g Toluol versetzt. Nach beendeter Zugabe wird 30 Minuten weitergerührt und 30 Minuten absitzen gelassen. Die untere Phase (3 665 g wäßrige Schwefelsäure) wird abgetrennt und verworfen.

Die organische Phase (1 731 g) hat folgende Zusammensetzung :

Tabelle 2

|         | Masse (g) | m Mol | Mol-% |
|---------|-----------|-------|-------|
| TPPMS   | 2,1       | 6     | 1,5   |
| DS      | 118,5     | 254   | 63,7  |
| TS      | 26,8      | 44    | 11,0  |
| ODS     | 27,3      | 57    | 14,3  |
| OTS     | 8,9       | 15    | 3,8   |
| SDS     | 7,9       | 16    | 4,0   |
| STS     | 4,3       | 7     | 1,7   |

Die organische phase enthält 1,3 Gew.% Sulfat.

Beispiel 2

Herstellung von TPPTS sowie Extraktion des Sulfonierungsgemisches

In einem 1 l-Kolben werden gemäß Beispiel 1 960 g 30 %iges Oleum vorgelegt. Innerhalb von 2 Stunden werden 105 g (0,4 mol) Triphenylphosphin und weitere 320 g 30 %iges Oleum zugegeben. Danach wird noch 24 Stunden bei 20 °C gerührt.

Das Reaktionsgemisch wird anschließend zu 2 502 g Wasser von 10 °C gegeben, man erhält 3 887 g Sulfonierungsgemisch folgender Zusammensetzung :

Tabelle 3

|        | g     | m Mol | Mol-% |
|--------|-------|-------|-------|
| TPPDS  | 62,6  | 134   | 33,8  |
| TS     | 128.7 | 213   | 53,8  |
| ODS    | 6,9   | 14    | 3,5   |
| OTS    | 15,7  | 27    | 6,8   |
| STS    | 4,7   | 8     | 2,1   |

Das homogene Sulfonierungsgemisch obiger Zusammensetzung wird gemäß Beispiel 1 mit einer Mischung aus 388 g (1 099 mMol) Triisooctylamin und 1 552 g Toluol versetzt. Nach Phasentrennung erhält man 3 660 g einer wäßrigen Schwefelsäurelösung und 2 167 g organische Phase folgender Zusammensetzung :

Tabelle 4

|        | Masse (g) | m Mol | Mol-% |
|--------|-----------|-------|-------|
| TPPDS  | 61,7      | 132   | 34,1  |
| TS     | 126,9     | 210   | 54,3  |
| ODS    | 7,2       | 15    | 3,9   |
| OTS    | 12,1      | 21    | 5,4   |
| STS    | 5,2       | 9     | 2,3   |

Die Sulfatkonzentration in der organischen Phase beträgt 1,44 Gew.%.

Beispiel 3

Reextraktioneiner TPPDS-haltigen Aminextraktionslösung mit verdünnter Kalilauge bei 20 °C

Gemäß Beispiel 1 wird ein vorwiegend TPPDS-haltiges Sulfonierungsgemisch hergestellt und mit einer Lösung aus Triisooctylamin und Toluol extrahiert. Die organische Lösung (3 000 g) weist folgende Zusammensetzung auf :

Tabelle 5

|        | g     | m Mol | Mol-% |
|--------|-------|-------|-------|
| TPPMS  | 1,6   | 4     | 0,6   |
| DS     | 207,4 | 445   | 64,4  |
| TS     | 46,4  | 77    | 11,1  |
| ODS    | 47,3  | 98    | 14,2  |
| OTS    | 15,4  | 26    | 3,8   |
| SDS    | 13,7  | 28    | 4,1   |
| STS    | 7,5   | 13    | 1,8   |

Die Sulfatkonzentration beträgt 1,4 %.

Das Extraktionsprodukt wird anschließend in einem 6 l-Kolben unter Rühren und Stickstoffschutz sukzessive mit 5 %iger wäßriger Kalilauge versetzt. Die pH-Messung erfolgt mit einer handelsüblichen Glaselektrode. Bei Erreichen des gewünschten pH-Wertes wird die Zugabe der Kalilauge unterbrochen. Das sich bildende zweiphasige System aus Triisooctylamin, Toluol und den Kaliumsalzen der sulfonierten Triphenylphosphine sowie der entsprechenden Oxide und Sulfide wird getrennt und die wasserfreie organische Phase erneut mit wäßriger Kalilauge versetzt. Die organische Phase wird entweder verworfen oder erneut zur Extraktion von Sulfonierungsgemischen verwendet.

Die Zusammensetzung der wäßrigen Lösungen der Kaliumsalze ist in den folgenden Tabellen aufgeführt.

### Tabelle 6

### Zusammensetzung

| Probe | pH-Wert | Masse wäßrige Phase (g) | DS g | mMol | TS g | mMol | ODS g | mMol | OTS g | mMol | SDS g | mMol | STS g | mMol | $SO_4^{2-}$ g | mMol |
|---|---|---|---|---|---|---|---|---|---|---|---|---|---|---|---|---|
| 1 | 4,00 | 1131,3 | | | | | 1,2 | 2 | | | | | | | 38,5 | 400 |
| 2 | 5,00 | 195,6 | | | 1,5 | 2 | 16,6 | 34 | 8,1 | 14 | | | 0,5 | 1 | 0,8 | 8 |
| 3 | 5,25 | 154,8 | | | 4,0 | 7 | 13,4 | 28 | 3,9 | 7 | | | 0,8 | 1 | 0,2 | 2 |
| 4 | 5,50 | 102,6 | 0,4 | 1 | 9,2 | 15 | 9,5 | 20 | 1,5 | 3 | | | 1,1 | 2 | 0,1 | 1 |
| 5 | 5,75 | 118,5 | 0,9 | 2 | 17,9 | 30 | 4,0 | 8 | 0,4 | 1 | 0,3 | 1 | 1,6 | 3 | <0,1 | |
| 6 | 6,00 | 78,6 | 2,4 | 5 | 9,5 | 16 | 0,8 | 2 | | | 0,8 | 2 | 2,2 | 4 | <0,1 | |
| 7 | 6,25 | 189,0 | 33,2 | 71 | 3,3 | 5 | 1,1 | 2 | | | 2,2 | 4 | 1,2 | 2 | | |
| 8 | 6,50 | 427,8 | 85,9 | 184 | | | 2,4 | 5 | | | 5,7 | 11 | | | | |
| 9 | 6,75 | 211,2 | 48,4 | 104 | | | 1,0 | 2 | | | 2,9 | 6 | | | | |
| 10 | 7,00 | 60,3 | 17,9 | 38 | | | 0,5 | 1 | | | 1,2 | 2 | | | | |
| 11 | 7,50 | 40,5 | 6,6 | 14 | | | 0,3 | 1 | | | 0,7 | 1 | | | | |
| 12 | 8,15 | 27,0 | 4,5 | 10 | | | 0,2 | | | | 0,3 | 1 | | | | |

Die Proben 8 und 9 weisen einen Gehalt an DS von 91,3 bzw. 92,5 Gew.% auf. Durch Einengen der wäßrigen Lösungen bis zur beginnenden kristallisation, Abfiltrieren, Waschen mit Methanol und Trocknen kann das Kaliumsalz des Di(m-sulfophenyl)phenylphosphins als weißer Feststoff in Reinheiten >95 % erhalten werden.

Beispiel 4

Reextraktion einer TPPTS-haltigen Aminextraktionslösung mit verdünnter Kalilauge bei 20 °C

Gemäß Beispiel 2 wird ein vorwiegend TTPTS-haltiges Sulfonierungsgemisch hergestellt und mit einer toluolischen Lösung von Triisooctylamin extrahiert. Die so erhaltene organische Phase (1 926 g) hat folgende Zusammensetzung :

Tabelle 7

|       | Masse (g) | m Mol | Mol-% |
|-------|-----------|-------|-------|
| TPPDS | 56,6      | 121   | 30,2  |
| TS    | 131,5     | 218   | 54,5  |
| ODS   | 6,8       | 14    | 3,5   |
| OTS   | 16,2      | 28    | 7,0   |
| SDS   | 2,1       | 4     | 1,0   |
| STS   | 8,7       | 15    | 3,8   |

Die Sulfatkonzentration in der organischen Phase beträgt 1,52 Gew.%.
Die Reextraktion mit 5 %iger wäßriger Kalilauge wird gemäß Beispiel 3 bei einer Innentemperatur von 20 °C durchgeführt. Die Ergebnisse sind in der folgenden Tabelle aufgeführt :

(Siehe Tabelle 8 Seite 8 f.)

Tabelle 8

Zusammensetzung

| Probe | pH-Wert | Masse wäßrige Phase (g) | DS | | TS | | ODS | | OTS | | SDS | | STS | | $SO_4^{2-}$ | |
|---|---|---|---|---|---|---|---|---|---|---|---|---|---|---|---|---|
| | | | g | mMol | g | mMol | g | mMol | g | mMol | g | mMol | g | mMol | g | mMol |
| 1 | 4,02 | 618 | | | | | | | 2,2 | 4 | | | | | 27,4 | 285 |
| 2 | 5,00 | 80 | | | 3,6 | 6 | 1,7 | 4 | 5,4 | 9 | | | 1,2 | 2 | 1,4 | 14 |
| 3 | 5,25 | 60 | | | 7,5 | 12 | 1,5 | 3 | 2,7 | 5 | | | 1,1 | 2 | 0,2 | 2 |
| 4 | 5,50 | 142 | | | 23,6 | 39 | 0,9 | 2 | 2,0 | 3 | | | 1,8 | 3 | <0,1 | |
| 5 | 5,75 | 212 | 0,3 | 1 | 38,4 | 64 | 0,4 | 1 | 1,2 | 2 | | | 2,1 | 3 | <0,1 | |
| 6 | 6,00 | 219 | 0,7 | 1 | 39,2 | 65 | 0,3 | 1 | 1,2 | 2 | | | 1,3 | 2 | | |
| 7 | 6,25 | 96 | 6,0 | 13 | 15,7 | 26 | 0,4 | 1 | 0,4 | 1 | | | 0,4 | 1 | | |
| 8 | 6,75 | 150 | 23,1 | 50 | 4,4 | 7 | 0,4 | 1 | | | 1,1 | 2 | 0,2 | | | |
| 9 | 7,00 | 86 | 16,0 | 34 | | | 0,6 | 1 | | | 0,7 | 1 | | | | |
| 10 | 7,54 | 49 | 8,9 | 19 | | | 0,3 | 1 | | | | | | | | |

0 107 006

Die Proben 5 und 6 weisen einen Gehalt an TS von 90,6 bzw. 91,8 Gew.% auf. Durch Einengen der wäßrigen Lösungen bis zur beginnenden Kristallisation, Abfiltrieren, Waschen mit Methanol und Trocknen kann das Kaliumsalz des Tri(m-sulfophenyl)phosphins als weißer Feststoff in einer Reinheit > 95 % erhalten werden.

Beispiel 5

Einfluß der Aminmenge bei der Extraktion eines TPPDS-haltigen Sulfonierungsgemisches

Ein gemäß Beispiel 1 hergestelltes Sulfonierungsgemisch wird mit unterschiedlichen Mengen Triisooctylamin und Toluol in der in Beispiel 1 angegebenen Weise extrahiert.

Das Sulfonierungsgemisch (432 g) weist folgende Zusammensetzung auf :

Tabelle 9

|  | Masse (g) | m Mol | Mol-% |
|---|---|---|---|
| TPPMS | 0,26 | 0,7 | 1,6 |
| DS | 13,31 | 28,6 | 64,3 |
| TS | 2,94 | 4,9 | 11,0 |
| ODS | 2,89 | 6,0 | 13,5 |
| OTS | 0.95 | 1,6 | 3,6 |
| SDS | 0,91 | 1,8 | 4,0 |
| STS | 0,52 | 0,9 | 2,0 |

Die Extraktion der schwefelsauren Lösung wird unter Beibehaltung gleicher Temperatur, konstanter Zusammensetzung des Sulfonierungsgemisches und gleicher Extraktionsdauer durchgeführt ; man erhält folgende Ergebnisse :

Tabelle 10

| Versuch | Amin (g) | (mMol) | Toluol (g) | Org. Phase (g) | Abfallsäure (g) |
|---|---|---|---|---|---|
| 1 | 9,1 | 26 | 36,4 | 50,9 | 426,6 |
| 2 | 15,2 | 43 | 60,8 | 84,3 | 423,7 |
| 3 | 21,3 | 60 | 85,2 | 123,6 | 414,9 |
| 4 | 27,4 | 78 | 109,6 | 156,4 | 412,6 |
| 5 | 30,5 | 86 | 122,0 | 172,9 | 411,6 |
| 6 | 33,5 | 95 | 134,0 | 192,3 | 407,2 |
| 7 | 39,6 | 112 | 158,4 | 221,0 | 409,0 |
| 8 | 45,7 | 129 | 182,8 | 257,0 | 403,3 |
| 9 | 51,8 | 147 | 207,2 | 288,0 | 402,7 |

Die Zusammensetzung der organischen Aminextraktionslösungen ist in der folgenden Tabelle aufgeführt :

### Tabelle 11

#### Organische Phase

| | Sulfo-nierungs-gemisch | | Versuch 1 | | Versuch 2 | | Versuch 3 | | Versuch 4 | | Versuch 5 | |
|---|---|---|---|---|---|---|---|---|---|---|---|---|
| Masse (g) | 432 | | 50,9 | | 84,3 | | 123,6 | | 156,4 | | 172,9 | |
| Zusammenset-zung | g | mMol | g | mMol | g | mMol | g | mMol | g | mMol | g | mMol |
| TPPMS | 0,26 | 0,7 | 0,20 | 0,5 | 0,19 | 0,5 | 0,20 | 0,5 | 0,25 | 0,7 | 0,24 | 0,7 |
| DS | 13,31 | 28,6 | 5,09 | 10,9 | 7,25 | 15,6 | 9,64 | 20,7 | 11,89 | 25,5 | 12,31 | 26,4 |
| TS | 2,94 | 4,9 | 0,28 | 0,5 | 0,73 | 1,2 | 1,74 | 2,9 | 2,86 | 4,7 | 2,94 | 4,9 |
| ODS | 2,89 | 6,0 | 1,71 | 3,5 | 2,11 | 4,4 | 2,52 | 5,2 | 2,70 | 5,6 | 2,71 | 5,6 |
| OTS | 0,95 | 1,6 | | | | | | | 0,20 | 0,3 | 0,41 | 0,7 |
| SDS | 0,91 | 1,8 | 0,55 | 1,1 | 0,56 | 1,1 | 0,63 | 1,3 | 0,61 | 1,2 | 0,59 | 1,2 |
| STS | 0,52 | 0,9 | 0,05 | 0,1 | 0,10 | 0,2 | 0,16 | 0,3 | 0,19 | 0,3 | 0,19 | 0,3 |
| Gesamt | 21,78 | 44,5 | 7,88 | 16,6 | 10,94 | 23,0 | 14,89 | 30,9 | 18,70 | 38,3 | 19,39 | 39,8 |
| Rückgewinnungs-quote[1] Gesamt | | | 36 % | | 50 % | | 68 % | | 86 % | | 89 % | |
| Rückgewinnungs-quote DS [2] | | | 38 % | | 55 % | | 72 % | | 89 % | | 93 % | |
| Rückgewinnungs-quote TS [3] | | | 9,5 % | | 25 % | | 59 % | | 97 % | | 100 % | |
| $SO_4^{2-}$ | | | 0,40% | | 0,42 % | | 0,86% | | 1,40 % | | 1,90% | |

1) extrahierte Sulfonate bezogen auf gesamteingesetzte Sulfonate (in Gew.%)
2) extrahiertes DS bezogen auf Menge eingesetztes DS (in Gew.%)
3) extrahiertes TS bezogen auf Menge eingesetztes TS (in Gew.%)

0 107 006

### Tabelle 11 (Fortsetzung)

#### Organische Phase

| | Sulfo-nierungs-gemisch | | Versuch 6 | | Versuch 7 | | Versuch 8 | | Versuch 9 | |
|---|---|---|---|---|---|---|---|---|---|---|
| Masse (g) | 432 | | 192,3 | | 221,0 | | 257,0 | | 288,3 | |
| Zusammenset-zung | g | mMol | g | mMol | g | mMol | g | mMol | g | mMol |
| TPPMS | 0,26 | 0,7 | 0,24 | 0,7 | 0,24 | 0,7 | 0,25 | 0,7 | 0,26 | 0,7 |
| DS | 13,31 | 28,6 | 12,84 | 27,6 | 12,90 | 27,7 | 12,95 | 27,8 | 12,98 | 27,9 |
| TS | 2,94 | 4,9 | 2,87 | 4,8 | 2,92 | 4,8 | 2,95 | 4,9 | 2,93 | 4,9 |
| ODS | 2,89 | 6,0 | 2,93 | 6,1 | 2,86 | 5,9 | 2,86 | 5,9 | 2,86 | 5,9 |
| OTS | 0,95 | 1,6 | 0,60 | 1,0 | 0,62 | 1,1 | 0,81 | 1,4 | 0,84 | 1,4 |
| SDS | 0,91 | 1,8 | 0,67 | 1,4 | 0,62 | 1,3 | 0,70 | 1,4 | 0,72 | 1,5 |
| STS | 0,52 | 0,9 | 0,22 | 0,4 | 0,24 | 0,4 | 0,29 | 0,5 | 0,31 | 0,5 |
| Gesamt | 21,78 | 44,5 | 20,37 | 42,0 | 20,40 | 41,9 | 20,81 | 42,6 | 20,90 | 42,8 |
| Rückgewinnungs-quote[1] Gesamt | | | 94 % | | 94 % | | 96 % | | 96 % | |
| Rückgewinnungs-quote DS[2] | | | 96 % | | 97 % | | 97 % | | 98 % | |
| Rückgewinnungs-quote TS[3] | | | 98 % | | 99 % | | 100 % | | 100 % | |
| $SO_4^{2-}$ | | | 2,50 % | | 3,76 % | | 4,37 % | | 6,92 % | |

1) extrahierte Sulfonate bezogen auf gesamteingesetzte Sulfonate (in Gew.%)
2) extrahiertes DS bezogen auf Menge eingesetztes DS (in Gew.%)
3) extrahiertes TS bezogen auf Menge eingesetztes TS (in Gew. %)

# 0 107 006

### Beispiel 6

Einfluß der Aminmenge bei der Extraktion eines TPPTS-haltigen Sulfonierungsgemisches

Ein gemäß Beispiel 2 hergestelltes Sulfonierungsgemisch, das vorwiegend TPPTS enthält, wird mit unterschiedlichen Mengen Triisooctylamin und Toluol in der in Beispiel 5 angegebenen Weise extrahiert. Das Sulfonierungsgemisch (3 911 g) weist folgende Zusammensetzung auf :

Tabelle 12

|  | g | mMol | Mol% |
|---|---|---|---|
| TPPDS | 29,9 | 64 | 17,3 |
| TS | 137,3 | 227 | 61,5 |
| ODS | 10,6 | 22 | 6,0 |
| OTS | 25,5 | 44 | 11,9 |
| STS | 7,0 | 12 | 3,3 |

Die Extraktion der schwefelsauren Lösung wird bei 20 °C, konstanter Zusammensetzung des Sulfonierungsgemisches und gleicher Extraktionsdauer durchgeführt ; die Ergebnisse sind in der folgenden Tabelle zusammengestellt :

Tabelle 13

| Versuch | Amin (g) | Amin (mMol) | Toluol (g) | Org. Phase (g) | Abfallsäure (g) |
|---|---|---|---|---|---|
| 1 | 107 | 303 | 426 | 596 | 3848 |
| 2 | 177 | 501 | 708 | 1012 | 3784 |
| 3 | 248 | 703 | 993 | 1390 | 3762 |
| 4 | 320 | 907 | 1279 | 1787 | 3723 |
| 5 | 355 | 1006 | 1420 | 1977 | 3709 |
| 6 | 390 | 1105 | 1560 | 2165 | 3696 |
| 7 | 461 | 1306 | 1846 | 2541 | 3677 |
| 8 | 532 | 1507 | 2128 | 2927 | 3644 |

Die organischen Phasen werden gemäß Beispiel 3 mit den entsprechenden Mengen wäßriger 7,1 %iger Kalilauge reextrahiert. Die Zusammensetzungen der so erhaltenen wäßrigen Kaliumsalzlösungen sind in der folgenden Tabelle aufgeführt :

Tabelle 14

Wässrige Kaliumsalz-Lösung

| | Sulfo-nierungs-gemisch | | Versuch 1 | | Versuch 2 | | Versuch 3 | | Versuch 4 | |
|---|---|---|---|---|---|---|---|---|---|---|
| Masse (g) | 3911 | | 402 | | 661 | | 925 | | 1219 | |
| Zusammenset-zung | g | mMol | g | mMol | g | mMol | g | mMol | g | mMol |
| TPPDS | 29,9 | 64 | 12,4 | 27 | 14,9 | 32 | 20,1 | 43 | 26,9 | 58 |
| TS | 137,3 | 227 | 35,1 | 58 | 70,1 | 116 | 87,9 | 146 | 115,1 | 191 |
| ODS | 10,6 | 22 | 0,8 | 2 | 3,7 | 8 | 4,8 | 10 | 7,2 | 15 |
| OTS | 25,5 | 44 | 0,4 | 1 | 1,9 | 3 | 3,9 | 7 | 6,3 | 11 |
| STS | 7,0 | 12 | 3,7 | 6 | 3,9 | 7 | 4,9 | 8 | 5,7 | 10 |
| Gesamt | 210,3 | 369 | 52,4 | 94 | 94,5 | 166 | 121,6 | 214 | 161,2 | 285 |
| Rückgewinnungs-quote[1] Gesamt | | | 25 % | | 45 % | | 58 % | | 77 % | |
| Rückgewinnungs-quote DS [2] | | | 41 % | | 50 % | | 67 % | | 90 % | |
| Rückgewinnungs-quote TS [3] | | | 26 % | | 51 % | | 64 % | | 84 % | |

1) extrahierte Sulfonate bezogen auf gesamteingesetzte Sulfonate (in Gew.%)
2) extrahiertes DS bezogen auf Menge eingesetztes DS (in Gew. %)
3) extrahiertes TS bezogen auf Menge eingesetztes TS (in Gew. %)

0 107 006

Tabelle 14 (Fortsetzung)

Organische Phase

| | Sulfo-nierungs-gemisch | | Versuch 5 | | Versuch 6 | | Versuch 7 | | Versuch 8 | |
|---|---|---|---|---|---|---|---|---|---|---|
| Masse (g) | 3911 | | 1345 | | 1484 | | 1788 | | 2104 | |
| Zusammenset-zung | g | mMol | g | mMol | g | mMol | g | mMol | g | mMol |
| TPPDS | 29,9 | 64 | 28,7 | 62 | 28,9 | 62 | 29,0 | 62 | 28,9 | 62 |
| TS | 137,3 | 227 | 128,1 | 212 | 130,4 | 216 | 131,4 | 218 | 131,3 | 217 |
| ODS | 10,6 | 22 | 8,4 | 17 | 9,5 | 20 | 9,6 | 20 | 9,9 | 21 |
| OTS | 25,5 | 44 | 9,1 | 16 | 14,7 | 25 | 16,9 | 29 | 24,5 | 42 |
| STS | 7,0 | 12 | 6,4 | 11 | 6,8 | 11 | 6,8 | 11 | 6,8 | 11 |
| Gesamt | 210,3 | 369 | 180,7 | 318 | 190,3 | 334 | 193,7 | 340 | 201,4 | 353 |
| Rückgewinnungs-quote [1] Gesamt | | | 86 % | | 90 % | | 92 % | | 96 % | |
| Rückgewinnungs-quote DS [2] | | | 96 % | | 97 % | | 97 % | | 97 % | |
| Rückgewinnungs-quote TS [3] | | | 93 % | | 95 % | | 96 % | | 96 % | |

1) extrahierte Sulfonate bezogen auf gesamteingesetzte Sulfonate (in Gew.%)
2) extrahiertes DS bezogen auf Menge eingesetztes DS (in Gew.%)
3) extrahiertes TS bezogen auf Menge eingesetztes TS (in Gew.%)

Beispiel 7

Abhängigkeit von der Art des Amins

Ein gemäß Beispiel 1 hergestelltes Sulfonierungsgemisch wird in der üblichen Weise mit verschiedenen Amin-Toluol-Gemischen extrahiert. Die Zusammensetzung des Einsatzsulfonierungsgemisches sowie die gefundenen Extrationsergebnisse sind in den folgenden Tabellen zusammengefaßt :

Tabelle 15

Zusammensetzung des Sulfonierungsgemisches (500 g)

|  | g | mMol | Mol% |
|---|---|---|---|
| TPPDS | 17,7 | 38 | 70,4 |
| TS | 4,2 | 7 | 13,0 |
| ODS | 3,4 | 7 | 13,0 |
| SDS | 0,95 | 2 | 3,6 |

(Siehe Tabellen Seite 16 ff.)

Tabelle 16

| Sulfo-nierungs-gemisch (g) | | Einsatz Amin (g) | (mMol) | Toluol (g) | Organische Phase (g) | Abfallsäure (g) |
|---|---|---|---|---|---|---|
| 500 | Isotridecylamin | 22,6 | 113 | 90,4 | 140,5 | 472,5 |
| 500 | Di-(2-ethylhexyl)-amin | 27,4 | 113· | 109,6 | 160,8 | 476,2 |
| 500 | Diisotridecylamin | 43,2 | 113 | 172,8 | 237,0 | 479,0 |
| 500 | Diisononylamin | 30,5 | 113 | 122,0 | 176,0 | 476,5 |
| 500 | Tri-n-hexylamin | 30,5 | 113 | 122,0 | 105,9 71,3 (2Phasen) | 475,3 |
| 500 | Tri-n-octylamin | 40,1 | 113 | 160,4 | 225,8 | 474,7 |
| 500 | Triisooctylamin | 40,1 | 113 | 160,4 | 226,7 | 473,8 |
| 500 | Triisononylamin | 44,8 | 113 | 179,2 | 249,2 | 474,8 |
| 500 | Tri-n-decylamin | 49,6 | 113 | 198,4 | 271,1 | 474,9 |
| 500 | Tribenzylamin | 32,5 | 113 | 130,0 | fest | |

0 107 006

Tabelle 17

| | Zusammensetzung der org. Phase | | | | | | | | Zusammensetzung der Abfallsäure-Phase | | | | | | | | $SO_4^{2-}$ Gehalt der org. Phase | |
| | DS | | TS | | ODS | | SDS | | DS | | TS | | ODS | | SDS | | | |
| | g | mMol | g | mMol | g | mMol | g | mMol | g | mMol | g | mMol | g | mMol | g | mMol | g | mMol |
|---|---|---|---|---|---|---|---|---|---|---|---|---|---|---|---|---|---|---|
| Isotridecylamin | 16,4 | 35 | 3,0 | 5 | 1,9 | 4 | 0,4 | 1 | 0,95 | 2 | 0,76 | 1 | 1,04 | 2 | | | 1,80 | 19 |
| Di-(2-ethyl)-hexylamin | 16,6 | 36 | 4,1 | 7 | 2,4 | 5 | 0,6 | 1 | | | | | 0,94 | 2 | | | 2,30 | 24 |
| Di-isotridecylamin | 16,6 | 35 | 3,2 | 5 | 1,9 | ·4 | 0,92 | 2 | 0,52 | 1 | 0,29 | 1 | 1,52 | 3 | | | 1,54 | 16 |
| Diisononylamin | 17,4 | 37 | 4,0 | 7 | 2,5 | 5 | 0,74 | 1 | 0,38 | 1 | | | 0,95 | 2 | | | 1,36 | 14 |
| Tri-n-hexylamin | 13,5 | 29 | 4,0 | 7 | 3,0 | 6 | 0,4 | 1 | | | | | 0,52 | 1 | | | 2,00 | 21 |
| Tri-n-octylamin | 17,3 | 37 | 4,1 | 7 | 2,4 | 5 | 0,86 | 2 | | | | | 1,09 | 2 | | | 2,37 | 25 |
| Triisooctylamin | 17,4 | 37 | 4,1 | 7 | 2,0 | 4 | 0,84 | 2 | | | | | 1,04 | 2 | | | 2,61 | 27 |
| Triisononylamin | 17,4 | 37 | 3,9 | 6 | 1,8 | 4 | 0,85 | 2 | | | | | 1,56 | 3 | | | 0,60 | 6 |
| Tri-n-decylamin | 17,5 | 38 | 4,0 | 7 | 1,9 | 4 | 0,87 | 2 | | | | | 1,04 | 2 | | | 2,49 | 26 |
| Tribenzylamin | wurde bei der Zugabe des Amin-Toluol-Gemisches fest | | | | | | | | | | | | | | | | | |

1) Bei der Extraktion entstanden 3 Phasen, wobei die oberste Phase noch 0,32 % ($\hat{=}$ 1 mMol) DS enthielt, die mittlere Phase enthielt die Hauptmenge an Wertprodukt.

# 0 107 006

## Pantentansprüche

1. Verfahren zur Herstellung mono, di- oder tri-sulfonierter Arylphosphine durch Sulfonierung von Tri-arlyphosphinen mit Oleum bei 0 bis 40 °C und Verdünnen des Sulfonierungsgemisches mit Wasser, dadurch gekennzeichnet, daß man die wäßrige Lösung des Sulfonierungsgemisches mit der Lösung eines wasserunlöslichen Amins in einem wasserunlöslichen organischen Lösungsmittel extrahiert, wobei je Äquivalent Sulfonsäure 0,5 bis 1,5 Mol des Amins zur Anwendung gelangen, die organische Phase abtrennt, mit der wäßrigen Lösung einer Base in innige Berührung bringt, darauf die wäßrige Phase abtrennt und aus dieser des sulfonierte Arylphosphin isoliert.

2. Verfahren nach Anspruch 1, dadurch gekennzeichnet, daß man je Äquivalent Sulfonsäure 0,8 bis 1,2 Mol Amin verwendet.

3. Verfahren nach Anspruch 1 und 2, dadurch gekennzeichnet, daß man offenkettige, verzweigte oder unverzweigte Amine mit 10 bis 60 Kohlenstoffatomen, vorzugsweise 13 bis 36 Kohlenstoffatomen verwendet.

4. Verfahren nach Anspruch 1 bis 3, dadurch gekennzeichnet, daß als Lösungsmittel für das Amin Toluol oder kerosinähliche Kohlenwasserstofffraktionen verwendet werden.

5. Verfahren nach Anspruch 1 bis 4, dadurch gekennzeichnet, daß als Basen Alkalihydroxid, Ammoniak oder Alkalicarbonate verwendet werden.

6. Verfahren nach Anspruch 1 bis 5, dadurch gekennzeichnet, daß die Zugabe der in Wasser gelösten Base in Anteilen erfolgt und nach jeder anteiligen Basenzugabe die wässrige Phase abgetrennt wird.

## Claims

1. A process for the preparation of mono, di or trisulfonated arylphosphines by the sulfonation of triarylphosphines with oleum at tempertatures of 0 to 40 °C and dilution of the sulfonation mixture with water, characterised in that the aqueous solution of the sulfonation mixture is extracted with the solution of a water-insoluble amine in a water-insoluble organic solution, whereby 0.5 to 1.5 Mol of the amine is used per equivalent sulfonic acid, the organic phase is separated and mixed intensively with the aqueous solution of a base whereupon the aqueous phase separates and the sulfonated arylphosphine is isolated from it.

2. Process according to claim 1 characterised in that 0.8 to 1.2 mol amine is used per equivalent of sulfonic acid.

3. Process according to claims 1 and 2 characterised in that open-chained, branched or unbranched amines with 10 to 60 carbon atoms, preferably 13 to 36 carbon atoms are used.

4. Process according to claims 1 to 3 characterised in that toluene or hydrocarbon fractions resembling kerosene are used as a solvent for the amine.

5. Process according to claims 1 to 4 characterised in that alkali hydroxide, ammonia or alkali carbonates ares used as bases.

6. Process according to claims 1 to 5 characterised in that the base dissolved in water is added in small amounts and that each time part of the base has been added, the aqueous phase is separated.

## Revendications

1. Procédé de préparation d'arylphosphines mono-, di- ou tri-sulfonées par sulfonation de triarylphosphines à l'aide d'oléum à une température de 0 à 40 °C et dilution du mélange de sulfonation par l'eau, caractérisé en ce que l'on extrait la solution aqueuse du mélange de sulfonation par la solution d'une amine insoluble dans l'eau dans un solvant organique insoluble dans l'eau, en utilisant de 0,5 à 1,5 moles de l'amine par équivalent d'acide sulfonique, on sépare la phase organique, on la met en contact intime avec la solution aqueuse d'une base, on sépare ensuite la phase aqueuse et on isole de celle-ci l'arylphosphine sulfonée.

2. Procédé selon la revendication 1, caractérisé en ce que l'on utilise de 0,8 à 1,2 moles d'amine par équivalent d'acide sulfonique.

3. Procédé selon les revendications 1 et 2, caractérisé en ce que l'on utilise des amines acycliques ramifiées ou non en C10-C60, de préférence en C13-C36.

4. Procédé selon les revendications 1 à 3, caractérisé en ce que l'on utilise en tant que solvants pour l'amine le toluène ou des fractions d'hydrocarbures analogues au kérosène.

5. Procédé selon les revendications 1 à 4, caractérisé en ce que l'on utilise en tant que base un hydroxyde alcalin, l'ammoniac ou un carbonate alcalin.

6. Procédé selon les revendications 1 à 5, caractérisé en ce que l'on ajoute la base dissoute dans l'eau par portions et on sépare la phase aqueuse après chaque addition de base.